# EUROPÄISCHE PATENTANMELDUNG

(11) **EP 1 132 238 A2**
(43) Veröffentlichungstag der Anmeldung: **12.09.2001**
(21) Anmeldenummer: 01105771.8
(22) Anmeldetag: 08.03.2001
(51) Int. Cl.: B60J 7/00

(54) **Fahrzeugdach mit zwei Deckeln und Himmel für ein derartiges Fahrzeugdach**

(30) Priorität: 10.03.2000 DE 10011339
(71) Anmelder: Webasto Vehicle Systems International GmbH, 82131 Stockdorf (DE)
(72) Erfinder: Pfalzgraf, Manfred, 82211 Herrsching (DE); De Gaillard, Francois, 85390 Mouilleron en Pareds (FR); Schleicher, Bernd, 80689 München (DE); Schätzler, Walter, 82319 Starnberg (DE)
(74) Vertreter: Konnerth, Dieter Hans

(57) **Zusammenfassung**

Die Erfindung betrifft ein Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), wobei beide Deckel (16, 17) in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil (13) verschiebbar sind, wobei der vordere Deckel (16) und der hintere Deckel (17) mit ihren jeweiligen Hinterkanten (18 bzw. 19) um ihre Vorderkanten (20, 21) in ihre Lüfterstellungen anhebbar sind.

## Beschreibung

Die Erfindung betrifft ein Fahrzeugdach mit zwei in einer festen Dachhaut ausgebildeten, hintereinander angeordneten Dachöffnungen und jeweils einem verstellbaren Deckel zum Verschließen und zumindest teilweisen Freigeben der Dachöffnungen sowie mit einem ortsfesten Mittelteil zwischen den beiden Dachöffnungen, wobei beide Deckel in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil verschiebbar sind.

In der EP 0 854 061 A1 ist ein derartiges Fahrzeugdach mit zwei Dachöffnungen beschrieben, wobei beim vorderen Deckel mittels einer Ausschwenkmechanik die Deckelhinterkante bezüglich der Deckelvorderkante in eine Lüfterstellung anhebbar und zum Verfahren unter das Mittelteil absenkbar ist und beim hinteren Dekkel in gleicher Weise die Deckelvorderkante bezüglich der Deckelhinterkante anhebbar und absenkbar ist.

Die Erfindung betrifft des weiteren einen Himmel für ein Fahrzeugdach mit zwei in einer festen Dachhaut ausgebildeten, hintereinander angeordneten Dachöffnungen und jeweils einem verstellbaren Deckel zum Verschließen und zumindest teilweisen Freigeben der Dachöffnungen sowie mit einem ortsfesten Mittelteil zwischen den beiden Dachöffnungen, wobei eine vordere Himmeleinheit aus einer dem vorderen Deckel zugeordneten Abdeckstellung nach hinten unter das Mittelteil verschiebbar ist und eine hintere Himmeleinheit aus einer dem hinteren Deckel zugeordneten Abdeckstellung nach vorne unter das Mittelteil verschiebbar ist. Die beiden vergleichsweise großflächigen Himmelelemente sind auf jeweiligen Führungsschienen geführt, die mit Höhenversatz zueinander unter der Dachhaut angeordnet sind, so daß sie gleichzeitig unter dem Mittelteil übereinander verstaut werden können. Durch die nach unten versetzte Führungsschiene wird jedoch der freie Kopfraum für Fahrzeuginsassen verringert.

Aufgabe der Erfindung ist es, ein eingangs genanntes Fahrzeugdach zu schaffen, bei dem durch unterschiedliche Deckelstellungen eine optimierte Belüftung des Fahrzeugs erzielbar ist.

Es ist eine weitere Aufgabe der Erfindung, einen Himmel für ein Fahrzeugdach der eingangs genannten Art zu schaffen, der mit weniger Raumbedarf in seiner Offenstellung unter einem Mittelteil des Daches verstaubar ist.

Die Aufgabe wird bei dem eingangs genannten Fahrzeugdach erfindungsgemäß dadurch gelöst, daß der vordere Deckel und der hintere Deckel mit ihren jeweiligen Hinterkanten um ihre Vorderkanten in ihre Lüfterstellungen anhebbar sind. Das Anheben der Hinterkanten erfolgt zweckmäßigerweise durch Verschwenken des Deckels um seine Vorderkante oder um eine Querachse, die im weiteren Bereich um die Vorderkante des Deckels verläuft. Hier sind somit zwei Schiebehebedächer kombiniert, wobei das hintere Schiebehebedach bzw. der hintere Dekkel mittels einer Führungseinrichtung aus seiner Schließstellung nach vorne unter das Mittelteil der Dachhaut verschiebbar ist.

Die Aufgabe wird bei dem eingangs genannten Fahrzeugdach erfindungsgemäß auch dadurch gelöst, daß der vordere Deckel um seine Hinterkante in seine Lüfterstellung absenkbar und der hintere Deckel um seine Vorderkante in seine Lüfterstellungen anhebbar ist. Der vordere, absenkbare Deckel wird aufgrund der Absenkung seiner Vorderkante auch als "Frontvent" bezeichnet. Durch die abgesenkte Vorderkante am vorderen Deckel und die angehobene Hinterkante des hinteren Deckels werden zwei voneinander entfernte Belüftungsöffnungen mit verbesserter Belüftungswirkung für den gesamten Fahrzeuginnenraum bereitgestellt.

Des weiteren wird die Aufgabe bei dem eingangs genannten Fahrzeugdach erfindungsgemäß dadurch gelöst, daß der vordere Deckel um seine Vorderkante in seine Lüfterstellung anhebbar und der hintere Deckel um seine Hinterkante in seine Lüfterstellung absenkbar ist.

Schließlich besteht eine weitere Lösung der Aufgabe darin, daß bei dem eingangs genannten Fahrzeugdach erfindungsgemäß der vordere Deckel und der hintere Deckel an ihren jeweiligen Vorderkanten um ihre jeweiligen Hinterkanten in ihre Lüfterstellungen absenkbar sind.

Wenn in einer bevorzugten Ausgestaltung des Fahrzeugdaches vor dem vorderen Deckel ein ausstellbarer Windabweiser angeordnet ist, so kann durch Ausstellen des Windabweisers ein Luftzug zum Entlüften des Innenraumes erzeugt werden, wobei insbesondere bei einem vorderen Deckel, der an seiner Vorderkante abgesenkt werden kann, eine deutlich größere Be- und Entlüftungsöffnung eingestellt werden kann, wenn auch der ausgeschwenkte Windabweiser eine zusätzliche Öffnung freigibt.

Die Lösung der Aufgabe bezüglich des oben genannten Himmels besteht darin, daß die beiden Himmeleinheiten in etwa in einer gemeinsamen dachnahen Ebene aus ihren Abdeckstellungen in Richtung zu ihren Öffnungsstellungen unter dem Mittelteil der Dachhaut geführt sind und daß wenigstens eine der beiden Himmeleinheiten in Längsrichtung in zumindest zwei gegeneinander verschwenkbare oder versetzbare Himmelelemente unterteilt ist und während ihrer Verschiebung unter das Mittelteil der Dachhaut aus ihrer dachnahen Anordnung unter die andere Himmeleinheit geführt ist. Durch die Unterteilung der großflächigen Himmeleinheit in zumindest zwei oder auch mehrere in Längsrichtung kürzere Himmelelemente ist die Himmeleinheit um eine oder mehrere Querachsen derart flexibel gestaltet, daß sie in eine Stauposition überführbar und darin ablegbar ist, wobei die Führungen zur Stauposition dachnah angeordnet sein können. Auf diese Weise wird der Kopfraum für Fahrzeuginsassen nicht übermäßig eingeschränkt. Die Himmeleinheit kann einzelne, getrennte und flexibel oder schwenkbar miteinander verbundene Elemente aufweisen oder alternativ kann sie einstückig mit in Längsrichtung unterteilten Abschnitten mit unterschiedlicher Biegeflexibilität ausgebildet sein, um beispielsweise einer S-förmig gebogenen Führungsbahn folgen zu können.

Vorteilhafte Ausgestaltungen der Erfindung sind in den Unteransprüchen angegeben.

Bevorzugt ist die eine Himmeleinheit an einer im wesentlichen der Dachkontur folgenden Führung verschiebbar gelagert, die sich vom zugeordneten Deckel unter das Mittelteil erstreckt, und daß die andere Himmeleinheit an einer Führung verschiebbar geführt ist, die im Bereich des Mittelteils unterhalb der andere Führung verläuft.

Wenn die beiden Himmeleinheiten unabhängig voneinander verschiebbar sind, kann entsprechend den Bedürfnissen der Fahrzeuginsassen auch nur eines der Himmelelemente teilweise oder ganz geschlossen werden.

Nachfolgend werden Ausführungsbeispiele des Fahrzeugdaches und des Himmels unter Bezugnahme auf Zeichnungen näher erläutert. Es zeigt:
- Fig. 1: in einer Draufsicht ein Fahrzeugdach eines Kraftfahrzeugs;
- Fig. 2A bis 2K: in Seitenansichten in schematischer Darstellung verschiedene Fahrzeugdächer in unterschiedlichen Stellungen der Dekkel der Dachöffnungen;
- Fig. 3A bis 3E: in Seitenansichten in schematischer Darstellung verschiedene Fahrzeugdächer mit einem Windabweiser in unterschiedlichen Stellungen der Deckel der Dachöffnungen; und
- Fig. 4A bis 4C: in Seitenansichten in schematischer Darstellung einen Himmel für das Fahrzeugdach in Öffnungs- und Schließstellung des Daches und des Himmels.

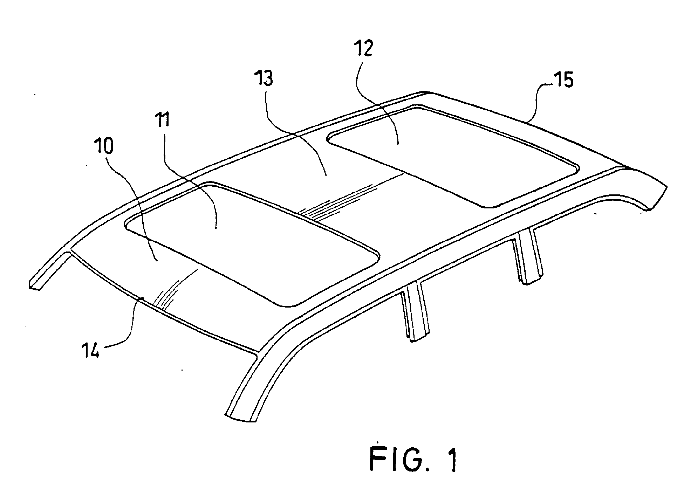

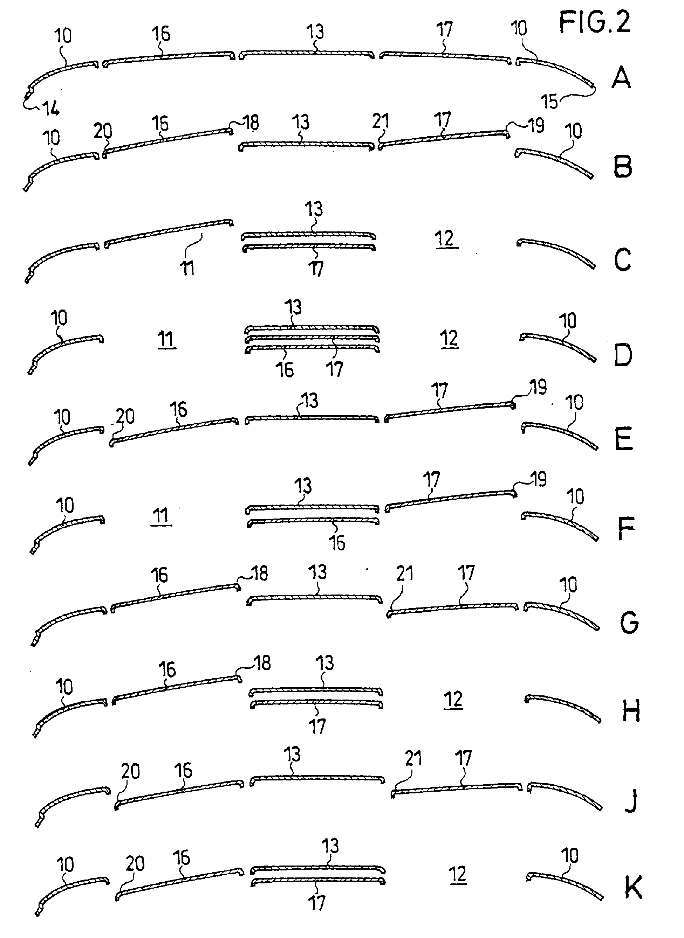

Ein Fahrzeugdach (siehe Fig. 1) weist in einer festen Dachhaut 10 zwei hintereinander angeordnete, insbesondere gleich große Dachöffnungen 11 und 12 auf, die von einem Mittelteil 13, das als Teil der festen Dachhaut 10 ausgebildet ist, voneinander getrennt sind. Die vordere Dachöffnung 11 ist nahe der Vorderkante 14 der Dachhaut 10 angeordnet, während die hintere Dachöffnung 12 nahe der Hinterkante 15 der Dachhaut 10 angeordnet ist. An der Unterseite der Dachhaut 10 ist ein Rahmen (nicht dargestellt) befestigt, der beidseits Führungsschienen aufweist, in denen ein vorderer Deckel 16 (siehe Fig. 2) und ein hinterer Deckel 17 in Fahrzeuglängsrichtung verschiebbar gelagert sind. Beide Deckel 16, 17 sind ferner jeweils mit einer Ausschwenkmechanik (nicht dargestellt) versehen, durch die der vordere Deckel 16 und der hintere Deckel 17 entsprechend unterschiedlicher Ausführungsbeispiele (siehe nachfolgende Beschreibung) an der jeweiligen Deckelhinterkante 18 bzw. 19 bezüglich der Deckelvorderkante 20 bzw. 21 oder an der Deckelvorderkante 20 bzw. 21 bezüglich der Deckelhinterkante 18 bzw. 19 in Lüfterstellungen anhebbar oder absenkbar sind, wobei beide Deckel 16, 17 um ihre Vorder- oder Hinterkanten oder einer der Deckel 16, 17 um seine Vorderkante und der andere Deckel um seine Hinterkante anhebbar oder absenkbar sind. Für ihre Schwenkbewegung und ihre Verschiebebewegung entlang der Führungsschienen werden die Deckel 16, 17 jeweils von einem eigenen Antrieb angetrieben, der auf bekannte Weise als Elektromotor mit Ritzel und drucksteifen Antriebskabeln ausgebildet sein kann. In dem Abschnitt unter dem Mittelteil 13 sind für beide Deckel 16, 17 jeweils eigene Führungsschienen vorgesehen und übereinander angeordnet, mit denen die beiden Deckel 16, 17 unter das Mittelteil 13 in eine übereinanderliegende Anordnung verfahrbar (siehe z. B. Fig. 2D).

In der in Fig. 2A gezeigten Schließstellung des Fahrzeugdaches verschließt der vordere Deckel 16 die vordere Dachöffnung 11 und der hintere Deckel 17 die hintere Dachöffnung 12.

In Fig. 2B ist eine Stellung gezeigt, in welcher die Hinterkante 18 des vorderen Deckels 16 sowie die Hinterkante 19 des hinteren Deckels 17 zu Entlüftungszwecken nach oben angehoben sind. Dies sind die Lüfterstellungen üblicher Schiebehebedächer.

In Fig. 2C ist der hintere Deckel 17 aus seiner Schließstellung entlang seiner Führungsschienen nach vorne bewegt und gänzlich unter das Mittelteil 13 verschoben, um die hintere Dachöffnung 12 vollständig freizugeben.

In Fig. 2D ist zusätzlich der vordere Deckel 16 aus seiner Schließstellung gemäß Fig. 2A entlang seiner Führungsschienen nach hinten bewegt und vollständig unter den hinteren Deckel 17 und das Mittelteil 13 verschoben, um die vordere Dachöffnung 11 vollständig freizugeben.

Bei einem weiteren Ausführungsbeispiel ist gemäß Fig. 2E der vordere Deckel 16 an seiner Vorderkante 20 in eine Lüfterstellung absenkbar, während die Hinterkante 19 des hinteren Deckels 17 nach oben angehoben ist. Zum vollständigen Öffnen der vorderen Dachöffnung 11 kann der vordere Deckel 16 nach hinten unter das Mittelteil 13 verschoben werden (siehe Fig. 2F). Zusätzlich kann der hintere Deckel 17 aus seiner Schließstellung nach vorne unter das Mittelteil 13 verschoben werden (nicht dargestellt), wobei entsprechend der Anordnung der jeweiligen Führungsschienen sowohl der vordere Deckel 16 wie auch der hintere Deckel 17 unmittelbar unter dem Mittelteil 13 und der jeweils andere Deckel darunter aufgenommen ist.

Bei dem in Fig. 2G dargestellten Fahrzeugdach ist der vordere Deckel 16 an seiner Hinterkante 18 in eine Lüfterstellung anhebbar, während die Vorderkante 21 des hinteren Deckels 17 nach unten abgesenkt ist. Zum vollständigen Öffnen der hinteren Dachöffnung 12 wird der hintere Deckel 17 aus seiner Schließstellung nach vorne unter das Mittelteil 13 verschoben (siehe Fig. 2H). Zusätzlich kann der vordere Deckel 16 aus seiner Schließstellung nach hinten unter das Mittelteil 13 verschoben werden (nicht dargestellt).

Schließlich sind bei einem weiteren Ausführungsbeispiel des Fahrzeugdaches sowohl der vordere Deckel 16 wie auch der hintere Deckel 17 an ihren Vorderkanten 20 bzw. 21 in Lüfterstellungen absenkbar (siehe Fig. 2J). Zum vollständigen Öffnen der Dachöffnungen 11 und 12 können der vordere Deckel 16 bzw. der hintere Deckel 17 unter das Mittelteil 13 verschoben werden (Fig. 2K).

Die Steuerung der Antriebe der beiden Deckel 16, 17 ist so ausgebildet, daß die Schwenkbewegungen der Deckel 16, 17 wie auch deren Verschiebebewegungen unter das Mittelteil 13 unabhängig voneinander ausgeführt werden können, wobei eine Kollision der Deckel 16, 17 während der Verschiebung unter das Mittelteil 13 durch die Anordnung der Führungsschienen ausgeschlossen ist.

Bei den Ausführungsformen gemäß den Fig. 2A bis 2K kann das Mittelteil 13 anstatt als Teil der festen Dachhaut 10 auch als separates, lichtdurchlässiges oder lichtundurchlässiges Teil aus Glas, Kunststoff oder Metall gefertigt sein. Es kann ferner aus Glas oder Kunststoff mit einer photovoltaischen Beschichtung versehen sein, um Strom beispielsweise für eine von der Fahrzeugbatterie unabhängige Standentlüftung des Fahrzeugs und/oder zum Laden der Fahrzeugbatterie zu erzeugen.

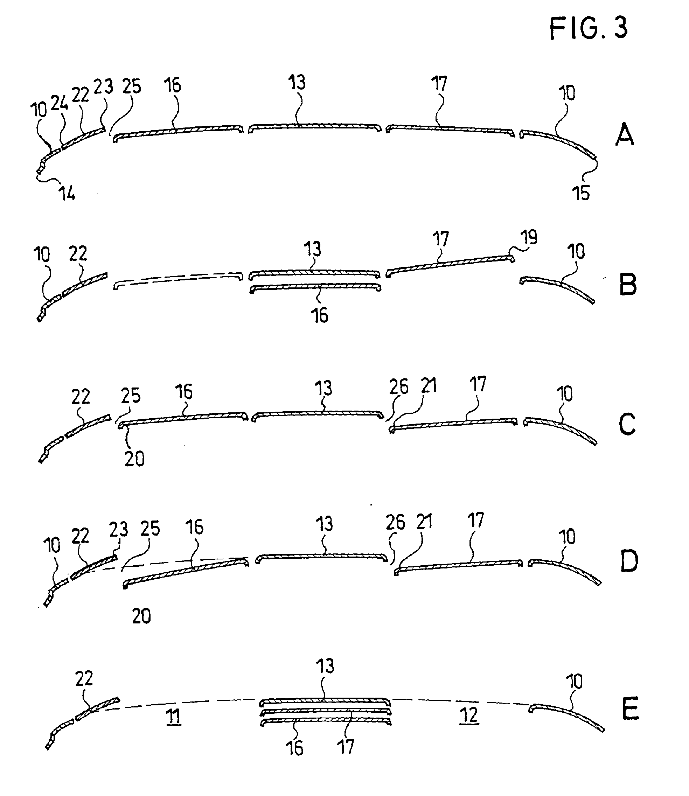

Die in den Fig. 3A bis 3E dargestellten Ausführungsbeispiele eines Fahrzeugdaches sind grundsätzlich wie die vorangehend beschriebenen Beispiele gebildet, enthalten gegenüber diesen jedoch zusätzlich einen Windabweiser 22, der zwischen der Vorderkante 14 der Dachhaut 10 und dem vorderen Deckel 16 angeordnet ist und mit seiner Hinterkante 23 um seine Vorderkante 24 nach oben schwenkbar ist. Der Windabweiser 22 kann als eine Lamelle gebildet sein, die als ein Schichtteil der Dachhaut 10 bündig auf dieser angeordnet ist und aus dieser bündigen Anordnung nach oben schwenkbar ist, so daß ein unterhalb der Lamelle verbleibender Festteil der Dachhaut 10 seine feste Anordnung beibehält. In einer alternativen Gestaltung bildet der Windabweiser 22 einen bewegbaren Teil der Dachhaut 10, der als Windabweiser-Einheit der Dachhaut 10 in seiner Gesamtheit nach oben schwenkbar ist und damit eine größere Lüfteröffnung 25 zwischen der angehobenen Hinterkante 23 des Windabweisers 22 und der Vorderkante 20 des in seiner Schließstellung angeordneten vorderen Deckels 16 freigeben kann (siehe Fig. 3A). Der Windabweiser 22 kann bei allen in den Fig. 2A bis 2K dargestellten Fahrzeugdächern verwendet werden. So können der vordere Deckel 16 und der hintere Deckel 17 mit ihren Ausstellmechanismen derart gebildet sein, daß sie entweder an ihren Vorderkanten abgesenkt oder an ihren Hinterkanten in Lüfterstellungen angehoben werden und der vordere Deckel ist nach hinten unter das Mittelteil 13 und der hintere Deckel 17 ist nach vorne unter das Mittelteil 13 verschiebbar.

Fig. 3B zeigt beispielhaft eine Stellung, in der der vordere Deckel 16 aus seiner Schließstellung (strichliert dargestellt) nach hinten unter das Mittelteil 13 verschoben ist und der hintere Deckel 17 an seiner Hinterkante 19 in Lüfterstellung angehoben ist.

Bei der in Fig. 3C dargestellten Variante ist der hintere Deckel 17 an seiner Vorderkante 21 in Lüfterstellung abgesenkt. Auch bei geschlossenem vorderen Dekkel 16 besteht durch die vom angehobenen Windabweiser 22 gebildete vordere Lüfteröffnung 25 und durch die vom hinteren Deckel 17 freigegebene Lüfteröffnung 26 eine zugfreie und dennoch gute Belüftung.

Die in Fig. 3D dargestellte Variante des Fahrzeugdaches enthält einen vorderen Deckel 16, der mit seiner Vorderkante 20 in eine Lüfterstellung absenkbar ist. Bei hochgeklapptem Windabweiser 22 entsteht zwischen der Hinterkante 23 des Windabweisers 22 und der gegenüber der Schließstellung (strichliert dargestellt) abgesenkten Vorderkante 20 des vorderen Deckels 16 somit eine deutlich größere vordere Lüfteröffnung 25, die in Verbindung mit der vom hinteren Deckel 17 freigegebene Lüfteröffnung 26 eine nochmals verbesserte Belüftung durch eine Luftzirkulation aus dem Innenraum durch die vordere Lüfteröffnung 25 nach außen über das Mittelteil 13 und durch die hintere Lüfteröffnung 26 zurück in den Innenraum ermöglicht.

Fig. 3E zeigt schließlich das Fahrzeugdach mit beiden Deckeln 16, 17 in Offenstellung unter dem Mittelteil 13 und mit hochgeklapptem Windabweiser 22.

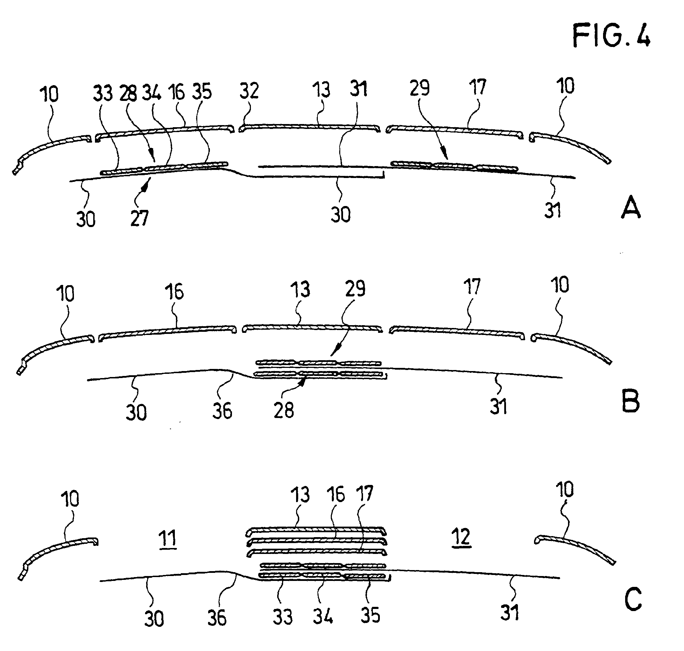

Ein in den Fig. 4A bis 4C dargestellter Himmel 27 für das Fahrzeugdach enthält eine vordere Himmeleinheit 28, die der vorderen Dachöffnung 11 bzw. dem vorderen insbesondere durchsichtigen Deckel 16 zugeordnet ist, und eine hintere Himmeleinheit 29, die der hinteren Dachöffnung bzw. dem hinteren insbesondere durchsichtigen Deckel 17 zugeordnet ist. Die beiden Himmeleinheiten 28 und 29 sind beidseits auf einer jeweiligen Führungsschienen 30 und 31 verschiebbar angeordnet. Die hintere Führungsschiene 31 erstreckt sich in einer Ebene nach vorne bis nahezu unter die Vorderkante 32 des Mittelteils 13 der Dachhaut 10. Die vordere Führungsschiene 30, die in etwa im Bereich unter dem vorderen Deckel 16 annähernd in einer Ebene mit der hinteren Führungsschiene 31 nahe am Fahrzeugdach verläuft, senkt sich zu Beginn des Mittelteils 13 der Dachhaut 10 unter die hintere Führungsschiene 31 ab und erstreckt sich unterhalb von dieser in einem Abstand, der geringfügig größer ist wie die Dicke der vorderen Himmeleinheit 28. Zumindest die vordere Himmeleinheit 28 ist in Längsrichtung in mehrere, beispielsweise drei Himmelelemente 33, 34 und 35 unterteilt, die miteinander flexibel und insbesondere um eine oder mehrere Querachse schwenkbar verbunden sind. Durch die Unterteilung der Himmeleinheit 28 in in Längsrichtung kürzere Himmelelemente 33, 34, 35 können diese aufgrund ihrer größeren Flexibilität der auf kurzer Wegstrecke S-förmig gekrümmten Bahnkurve 36 der vorderen Führungsschiene 30 folgen und in die untere Ablageebene unter dem Mittelteil 13 geführt werden. Die hintere Himmeleinheit 29 wird auf ihrer Führungsbahn 31 über die vordere, unten angeordnete Himmeleinheit 28 unter das Mittelteil 13 verschoben, so daß beide Himmeleinheiten 28, 29 die Dachöffnungen 11, 12 freigeben (siehe Fig. 4C). Die hintere Himmeleinheit 29 kann auch in zwei oder mehrere Himmelelemente unterteilt ein, wobei diese Unterteilung bei diesem Ausführungsbeispiel nicht erforderlich ist, bei dem die hintere Himmeleinheit 29 in etwa auf einer weitgehend ebenen Bahn der Führungsschiene geführt ist.

Die Ebene, in der die Führungsschienen 30, 31 im wesentlichen angeordnet sind, kann eben oder entsprechend der Form der Dachhaut gekrümmt sein.

### Bezugszeichenliste

- 10: Dachhaut
- 11: vordere Dachöffnung
- 12: hintere Dachöffnung
- 13: Mittelteil
- 14: Vorderkante
- 15: Hinterkante
- 16: vorderer Deckel
- 17: hinterer Deckel
- 18: Deckelhinterkante
- 19: Deckelhinterkante
- 20: Deckelvorderkante
- 21: Deckelvorderkante
- 22: Windabweiser
- 23: Hinterkante
- 24: Vorderkante
- 25: Lüfteröffnung
- 26: Lüfteröffnung
- 27: Himmel
- 28: vordere Himmeleinheit
- 29: hintere Himmeleinheit
- 30: Führungsschiene
- 31: Führungsschiene
- 32: Vorderkante
- 33: Himmelelement
- 34: Himmelelement
- 35: Himmelelement

## Patentansprüche

1. Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), wobei beide Deckel (16, 17) in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil (13) verschiebbar sind,
**dadurch gekennzeichnet,**
daß der vordere Deckel (16) und der hintere Deckel (17) mit ihren jeweiligen Hinterkanten (18 bzw. 19) um ihre Vorderkanten (20, 21) in ihre Lüfterstellungen anhebbar sind.

2. Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), wobei beide Deckel (16, 17) in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil (13) verschiebbar sind,
**dadurch gekennzeichnet,**
daß der vordere Deckel (16) um seine Hinterkante (18) in seine Lüfterstellung absenkbar und der hintere Deckel (17) um seine Vorderkante (21) in seine Lüfterstellung anhebbar ist.

3. Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), wobei beide Deckel (16, 17) in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil (13) verschiebbar sind,
**dadurch gekennzeichnet,**
daß der vordere Deckel (16) um seine Vorderkante (20) in seine Lüfterstellung anhebbar und der hintere Deckel (17) um seine Hinterkante (19) in seine Lüfterstellung absenkbar ist.

4. Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), wobei beide Deckel (16, 17) in Fahrzeuglängsrichtung verschiebbar, in ihre Lüfterstellungen um eine jeweilige Querachse und insbesondere um eine Deckel-Querkante verschwenkbar und in ihre Offenstellungen unter das Mittelteil (13) verschiebbar sind,
**dadurch gekennzeichnet,**
daß der vordere Deckel (16) und der hintere Deckel (17) an ihren jeweiligen Vorderkanten (20, 21) um ihre jeweiligen Hinterkanten (18, 19) in ihre Lüfterstellungen absenkbar sind.

5. Fahrzeugdach nach einem der Ansprüche 1 bis 4,
**dadurch gekennzeichnet**, daß vor dem vorderen Deckel (16) ein ausstellbarer Windabweiser (22) angeordnet ist.

6. Himmel für ein Fahrzeugdach mit zwei in einer festen Dachhaut (10) ausgebildeten, hintereinander angeordneten Dachöffnungen (11, 12) und jeweils einem verstellbaren Deckel (16, 17) zum Verschließen und zumindest teilweisen Freigeben der Dachöffnungen (11, 12) sowie mit einem ortsfesten Mittelteil (13) zwischen den beiden Dachöffnungen (11, 12), insbesondere für ein Fahrzeugdach nach einem der Ansprüche 1 bis 5, wobei eine vordere Himmeleinheit (28) aus einer dem vorderen Deckel (16) zugeordneten Abdeckstellung nach hinten unter das Mittelteil (13) verschiebbar ist und eine hintere Himmeleinheit (29) aus einer dem hinteren Deckel (17) zugeordneten Abdeckstellung nach vorne unter das Mittelteil (13) verschiebbar ist,
**dadurch gekennzeichnet,**
daß die beiden Himmeleinheiten (28, 29) in etwa in einer gemeinsamen dachnahen Ebene (30, 31) aus ihren Abdeckstellungen in Richtung zu ihren Öffnungsstellungen unter dem Mittelteil (13) der Dachhaut (10) geführt sind und daß wenigstens eine der beiden Himmeleinheiten (28) in Längsrichtung in zumindest zwei gegeneinander verschwenkbare oder versetzbare Himmelelemente (33, 34, 35) unterteilt ist und während ihrer Verschiebung unter das Mittelteil (13) der Dachhaut (10) aus ihrer dachnahen Anordnung unter die andere Himmeleinheit (29) geführt ist.

7. Himmel nach Anspruch 6,
**dadurch gekennzeichnet**, daß die eine Himmeleinheit (29) an einer im wesentlichen der Dachkontur folgenden Führung (31) verschiebbar gelagert ist, die sich vom zugeordneten Deckel (17) unter das Mittelteil (13) erstreckt, und daß die andere Himmeleinheit (28) an einer Führung (30) verschiebbar geführt ist, die im Bereich des Mittelteils (13) unterhalb der anderen Führung verläuft.

8. Himmel nach Anspruch 6 oder 7,
**dadurch gekennzeichnet**, daß die beiden Himmeleinheiten (28, 29) unabhängig voneinander verschiebbar sind.
